Europäisches Patentamt

(19) European Patent Office

Office européen des brevets

(11) Publication number : **0 303 596 B1**

# EUROPEAN PATENT SPECIFICATION

(45) Date of publication of patent specification :
05.02.92 Bulletin 92/06

(51) Int. Cl.$^5$ : **A01K 73/06, B66D 1/50**

(21) Application number : **87901407.4**

(22) Date of filing : **19.02.87**

(86) International application number :
**PCT/DK87/00016**

(87) International publication number :
**WO 88/05999 25.08.88 Gazette 88/19**

(54) **TRAWL WINCH FOR FISHING VESSEL.**

(43) Date of publication of application :
22.02.89 Bulletin 89/08

(45) Publication of the grant of the patent :
05.02.92 Bulletin 92/06

(84) Designated Contracting States :
**BE DE FR GB IT NL SE**

(56) References cited :
**DE-A- 3 514 048**
**DE-C- 334 430**
**NO-B- 136 747**
**US-A- 2 984 455**
**US-A- 3 300 189**

(73) Proprietor : **BECH, Jorgin**
**Faeroerne**
**DK-3845 Skala (DK)**

(72) Inventor : **BECH, Jorgin**
**Faeroerne**
**DK-3845 Skala (DK)**

(74) Representative : **Lund, Preben et al**
**LARSEN & BIRKEHOLM ApS Skagensgade 64**
**Box 200**
**DK-2630 Taastrup (DK)**

## Description

The invention relates to a trawl winch for fishing vessels and of the kind described in the introduction to claim 1, preferably, but not exclusively, for stern trawlers.

When a fishing vessel such as a stern trawler is trawling, it is important that the two trawl cables, the starboard and the port trawl cable, respectively, or cable pairs are equally loaded. Experience has proved that the trawl opening is greatest when the pull in the cables is equal, and maximum opening of the trawl will provide greater or faster catch.

In some trawl winches the pull in the cables is measured and one of the cables is then slackened or tightened to provide an equal pull in both cables, or there is applied a so-called split winch with automatic control of the wire pull. Alternatively, one endeavours in some other way by means of the drive engine or drive engines of the trawl drums to keep the pull in the trawl cables substantially equal. This requires energy and in some structures it is moreover necessary to assign a crew member to control the trawl winch and to adjust the pull during the entire trawling period which perhaps lasts 1/2 - 2 hours or longer. The energy requirement for controlling the trawl winch is considerable and amounts by fishing for 20 hours per day to 19 litres of fuel oil per 100 h.p. of the vessel's propelling machinery. As an example, a stern trawler with 700 h.p. propelling machinery uses 133 litres of oil per day. Even if this does not sound of much, it will nevertheless exceed an amount of 100,000.- Dkr. by 300 fishing days in a year given fuel costs of 3 Dkr. per litre.

The object of the invention is to provide a trawl winch which may in the usual manner be used for letting out and hauling in trawls but which will use no energy during the trawling while always ensuring an equal pull in the trawl cables.

This is achieved by designing the winch according to the invention as further disclosed in the characterising part of claim 1. When the power input device of the differential is blocked, for example by the drive engine, the two drums may freely rotate but in opposite directions. When one of the drums slackens the cable, the other drum will accordingly tighten its cable and vice versa. This means that the total pull of the trawl is transmitted to the two cables with exactly half the pull on each cable. Especially when turning where the load on the inner cable lessens considerably - by trawling on a sea floor slope where the pull would otherwise be quite unequal resulting in a small trawl opening - it is highly advantageous quickly, fully automatically and without extra energy consumption always to have an equal pull in the two cables. If one of the otter boards gets stuck in the sea floor, the other one will move forwards at double speed but the extra load will be distributed by half the load in each cable thereby avoiding damage to the fishing tackle before bringing the vessel to a stop. By conventional trawl winches, where the drums are braked on band brakes, the entire load will be transmitted to the cable on the stuck otter board.

The hauling in of the trawl with the winch according to the invention is performed by activating a differential lock so that the drive engive will transmit the same moment to the two drums. In this way it is possible to let out and haul in the trawl in the usual manner.

By designing the trawl winch according to the invention it is simple to arrange the blocking between the drive unit/drive engine and the differential. The blocking means is mechanical and may be activated from the wheel house. The blocking means may be executed in a quite simple manner, particularly for small vessels, so that it merely consists of a manually operated arm which blocks the power input device of the differential.

Claim 2 discloses a particularly advantageous embodiment of a very compact design of the trawl winch according to the invention.

US-A-2984455, which discloses a winch with the features of the preamble of claim 1, discloses a use of a differential having a differential lock between the cable drums in a winch for a vessel, the differential comprising two cable drums which are operated by a drive engine, thereby controlling the cable drums in such a manner that the pulling action in both cables in substantially equal.

The invention will now be further described in the following with reference to the drawing showing an embodiment of the invention wherein

Fig. 1 schematically shows the principal structure and function of the invention, and

Fig. 2 shows an example of a mechanical embodiment of the trawl winch according to the invention.

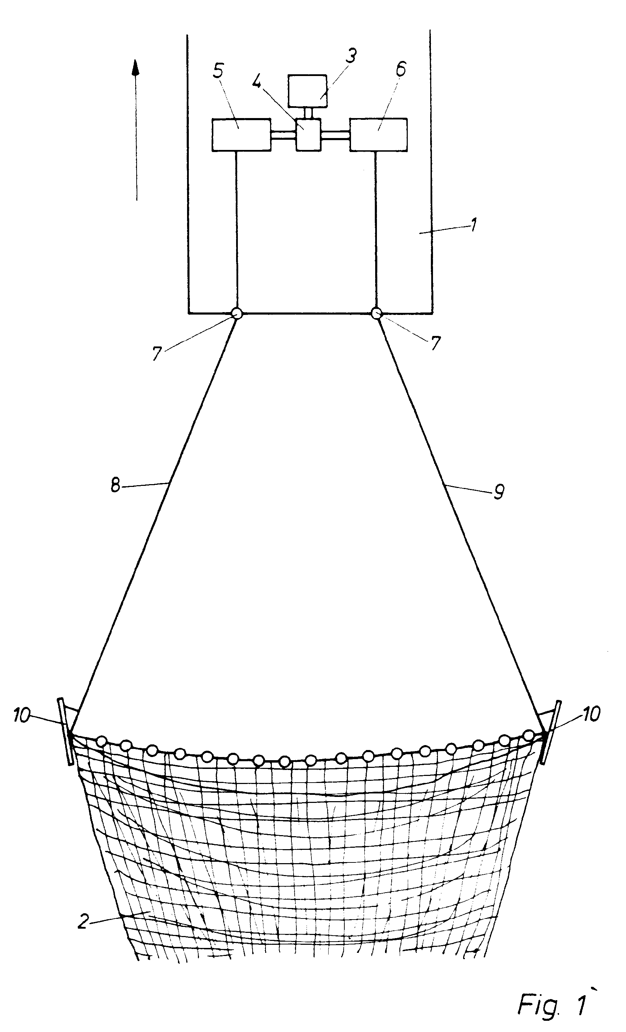

In Fig. 1 of the drawing the stern of a vessel is shown schematically and is designated 1. On the vessel there is arranged a trawl winch with two cable drums 5 and 6 which through a differential 4 are pulled by a common drive engine or motor 3 which may be any type of engine or motor, such as an electric motor, a hydraulic engine or a combustin engine. From each of the cable drums 5 and 6 the trawl cables 8 and 9 extend through each its block 7 to the trawl 2 which in the usual manner is manoeuvered by two otter boards 10.

When the trawl is set and the vessel 1 pulls the trawl 2, the drive engine 3 or the connection between the drive engine 3 and the differential 4 is stopped and blocked in such a manner that the two cable drums 5 and 6 are still connected via the differential 4. This produces the result that the two drums are freely rotatable but always in opposite directions so that any difference in the pull in the cables 8 and 9 is equalised so that the pull is always quite equal. This results in maximum opening of the trawl 2 and thereby maximum catch.

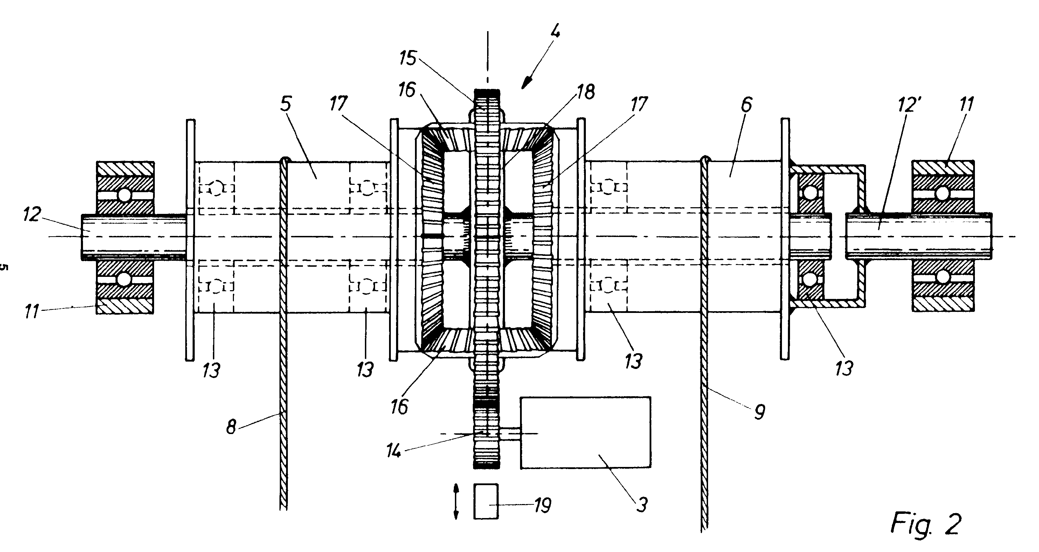

Fig. 2 shows an example of a trawl winch with a mechanical gear differential between the two drums. The drive engine 3 with drive gear (driving pinion) 14 is in mesh with the power input device 15 (crown wheel). The blocking means may for example be a mechanical blocking means 19 engaging the drive gear 14 or the power input device 15. It is also possible to perform the blocking by locking the drive engine 3.

The cable drums 5 and 6 for the trawl cables 8 and 9 are arranged on a common shaft 12, 12' on either side of a gear differential 4 in that the drums 5 and 6 on the sides facing the differential are provided with a ring gear 17 operating as drum drives. Said drum drives 17 are in mesh with differential pinion gears 16 arranged on a retaining shaft 18 secured to the power input device 15 forming the crown wheel of the differential. The crown wheel 15 is a circular ring gear welded to the retaining shaft 18 and is designed with a circular ring gear with external teeth. The centre axis of the crown wheel 15 is common with that of the shaft 12 and the retaining shaft is at right angles to the main shaft 12.

The main shaft 12, 12' is embedded in bearing pedestals 11 in the usual manner in that said bearing pedestals 11 are secured to the deck of the vessel.

The two drums 5 and 6 are secured to the shaft 12 by solid bearings 13. The differential operates in the usual manner and for clearness the differential lock is not shown. The differential lock may moreover be designed in a generally known manner and such that it may either be manually operated or operated from the wheel house.

## Claims

1. Trawl winch for fishing vessel (1) comprising two cable drums (5, 6), for each a trawl cable (8, 9), said drums being operated by a drive engine (3), and where the two cable drums (5, 6) are coupled to a common differential (4) having a differential lock in a manner to control the cable drums, when trawling, such that the pulling action in both cables is substantially equal, and a power input device (15) of the differential which is coupled to the drive engine (3) characterized in that it further comprises a mechanical blocking means (19) for blocking the power input device (15) relative to the trawl winch pedestal (11).

2. Trawl winch according to claim 1, **characterized** in that the two drums (5, 6) are arranged on a common shaft (12, 12') and on either side of the differential (4).

## Patentansprüche

1. Schleppnetz-Winde für ein Fischfahrzeug (1), die aus zwei Draht-Trommeln (5,6) für jede ihre Schleppnetzdraht (8,9) besteht, welche Trommel von einem Antriebsmotor (3) gesteuert werden, und wo die zwei Draht-Trommel (5,6) an einer gemeinsamen Differential (4) mit einer Differentialsperre gekoppelt sind, die zur Steuerung der Draht-Trommel während des Schleppnetzfischens vorgerichtet ist, damit dass der Antrieb der beiden Drähte im wesentlichen gleich gross wird, und ein Krafteingang (15) für die Differential, die an dem Antriebsmotor (3) gekoppelt ist, **dadurch gekennzeichnet**, dass sie weiterhin ein mechanisches Sperrorgan (19) zur Sperrung des Krafteingangs (15) umfasst, der mit dem Lagerbock (11) der Schleppnetz-Winde verbunden ist.

2. Schleppnetz-Winde nach Anspruch 1, **dadurch gekennzeichnet**, dass die zwei Trommel (5,6) auf einer gemeinsamen Achse (12,12') und auf jeder Seite der Differential gelagert sind.

## Revendications

1. Treuil de chalut pour bateau de pêche (1) comprenant deux tambours à câble (5,6), pour chaque câble de chalut (8,9), lesdits tambours étant actionnés par un moteur d'entrainement (3), et dans lequel les deux tambours à câble (5, 6) sont accouplés à un différentiel commun (4) comportant un verrouillage différentiel de manière à commander les tambours de câble, pendant la pêche au chalut, de façon que l'action de tirage exercée sur les deux câbles soit sensiblement identique, et un dispositif d'application de l'alimentation (15) du différentiel qui est accouplé au moteur d'entrainement (3) caractérisé en ce qu'il comprend en outre un moyen mécanique de blocage (19) pour bloquer le dispositif d'application de l'alimentation (15) par rapport au piédestal du treuil de chalut (11).

2. Treuil de chalut selon la revendication 1, caractérisé en ce que les deux tambours (5, 6) sont montés sur un arbre commun (12, 12') et de chaque côté du différentiel (4).

Fig. 1

*Fig. 2*